# EUROPEAN PATENT SPECIFICATION

(11) **EP 0 472 611 B1**
(45) Date of publication and mention of the grant of the patent: **17.05.1995**
(21) Application number: 90908283.6
(22) Date of filing: 18.05.1990
(51) Int. Cl.: D04C 1/02, D04B 1/14

(54) **SOUND ABSORBENT SLEEVING**
SCHALLABSORBIERENDES SCHLAUCHPRODUKT
GAINE ABSORBANT LE SON

(30) Priority: 19.05.1989 US 354525
(43) Date of publication of application: 04.03.1992
(73) Proprietor: THE BENTLEY-HARRIS MANUFACTURING CO., Lionville, Pennsylvania 19353 (US); T&N PLC, Manchester M17 1RA (GB)
(72) Inventor: BARLOW, Richard, A., Newtown Square, PA 19073 (US); CONAGHAN, Thomas, B., Rock Hall, MD 22601 (US); GLADFELTER, Harry, F., Phoenixville, PA 19460 (US); KITE, J., Sellars, III, West Chester, PA 19380 (US); MIMMO, Peter, J., Cleamery, PA 19034 (US); TRESSLAR, Marie, C., Plymouth Meeting, PA 19462 (US)
(74) Representative: Crux, John Anthony T&N plc, Group Patent Department
(86) International application number: PCT/GB90/00761
(87) International publication number: WO 90/14455

(56) References cited:
- EP-A- 0 077 665
- EP-A- 0 117 057
- US-A- 4 794 767

## Description

This invention relates to protective woven, knitted, or braided fabric sleeve-type coverings for products subject to vibration, thereby creating undesirable noise. More particularly, the invention relates to sleeve type products formed from bulky yarns for the purpose of enclosing elongated articles such as wires or cables. A particular application is found in the automotive industry for sleeving for enclosing wires or tubes where they exist within confined spaces.

### Description of the Prior Art

The need for an economical, protective covering for loose items such as cables, particularly under vibrating conditions, whether hot or cold, is well known in the art.

For many applications, such sleeving materials are desirably formed from loose, bulky yarns as these materials have excellent sound absorbency characteristics. However, sleeving formed of such yarns tends to be limp, shapeless and difficult to slide over or fit around a bundle of wires or other elongated substrates.

Nothing in the following prior art taken singularly or together, has addressed these problems.

For example, US-A-4,484,024 discloses a tubular bulky sleeve produced from bulky (i.e. low density, high surface area) yarns and an outer coating.

US-A-4,158,984 describes using yarns of two different kinds of wire to form a braid. One wire has high durability and low tensile strength and the other has a low durability and high tensile strength. The flexibility of the material is different for either wire. The material is costly, and is suitable only for covering high fluid pressure hoses. Sound absorbency is not a relevant factor and in any case would not be provided by this material.

US-A-3,815,468 describes using a braided fabric of ptfe filaments and high temperature nylon filaments in which the filaments are washed with solvents to remove the sizing. This is followed by impregnating each fibre with a resin. These types of fabric are useful for bearing surfaces, but are expensive and unsuitable for covering items such as automotive hoses, where the impregnated resin burns away and flakes off.

US-A-2,335,088 describes the use of two superimposed fabric covers for electric wiring, to prevent festooning. This is to be contrasted with the Applicants' use of only one cover.

### Summary of the Invention

The flexible fabric sleeve products of this invention are for protecting and covering bundles of hoses, tubes and wiring used under abrasive and vibrating conditions such as tubing and cables which extend into a confined space and produce undesirable vibration induced noise in a space such as the interior of an automobile door. Thus according to the present invention, a textile sleeve for bundling of elongated substrates, said sleeve comprises a plurality of interthreaded first and second yarns, the first yarn being a bulky filament yarn and the second yarn being a monofilament of an engineering plastics material, characterised in that said monofilament has a diameter of about 0.18mm to about 0.3mm and a tensile modulus of at least 690mPa, and that the two yarns are present in the sleeve in the ratio of one end of bulky yarn to from one end to three ends of monofilament. The first and second yarns are combined, preferably by knitting or braiding. The fabric sleeve product has a sound absorbency substantially equal to the sound absorbency of a fabric sleeve made only of the first yarn. The second yarn is distributed throughout the fabric to form a matrix and is present in quantity to confer a handling quality sufficient to cause sleeves so formed to stay open so that they resist collapse and readily open up when they are fitted over a bundle of wires. In flat products, the improved handling quality will resist the tendency of the material to fold over upon itself and will facilitate wrapping of a substrate.

### DESCRIPTION OF PREFERRED EMBODIMENTS OF THE INVENTION

The knitted, woven, or braided articles formed according to the teachings of this invention are useful for many different protective coverings of products used under vibrating conditions and particularly those used under vibration conditions like the electrical wiring within doors and other confined, inaccessible areas in trucks, buses and cars.

The flexible articles of this invention are made from two different yarns. The first yarn is a relatively loose bulky yarn of a material such as polypropylene, although a variety of yarns, either man-made or natural or mixtures thereof may be used. The material is chosed based on the articles to be protected, the type of environmental conditions, and the costs of such material. Generally stated, for automotive applications, materials which are moisture repellant or moisture resistant are preferred. Bulky yarns typically have a density of about 70% or less, preferably from about 40% to about 60% and most preferably from about 45% to about 55% of the density of non-bulky yarns of the same composition and diameter. The bulky yarns may be either continuous filament yarns or short filament spun yarns.

The second yarn is a resilient monofilament material and is formed of an engineering plastics material. A resilient monofilament useful in this invention should have sufficient tensile modulus to provide the desired resilient (springback) characteristic in the end product. Preferably, the fibre or yarn used as the second yarn is of a polyester material, but it will be appreciated that any of the family of plastics known as engineered plastics are suitable for use in the sleeves of the invention. By engineered plastics in this context,it is meant that the plastics material has a tensile modulus of greater than about 700mPa and preferably greater than 1000mPa and more preferably at least 1350mPa. Examples of engineering plastics are the olefin polymers, of which some preferred olefin polymers are high density polyethylene, polypropylene, polybutene-1, poly 4-methyl pentene and fluorinated polyolefins such as ethylenetrifluorochloroethylene copolyers, ethylenetetrafluoroethylene copolymers and vinylidene fluoride polymers, especially polyvinylidene fluoride, and blends thereof, for example, the fluorinated olefin blends as described in GB-A-1,120,131; polyesters, for example, polyethylene terephthalate, polytetramethylene terephathalate for example those treated as described in US-A-3,968,015; 4,073,830 and 4,113,594; polyphenylene -oxide and -sulphide, blends of polyethylene oxide with polystyrene, silicone-carbonate block copolymers, polyketones, such as polyarylether ketones, for example, those described in US-A-3,953,400; 4,024,314; 4,229,564; 3,751,398; 3,914,298; 3,965,146; and 4,111,908; polysulphones, for example polyaryl sulphones, polyarylether sulphones, polyetherimides, for example those described in US-A-3,847,867, polycarbonates especially those derived from bis phenol-A, polyamides, especially those described in US-A-3,551,200 and 3,677,921, epoxy resins and blends of one or more of the above mentioned polymeric materials either with each other or with other polymeric materials. Additional discussion of such materials is found in British Specification -A-1,529,351. Polyphenylene sulphide monofilaments sold by Philips under the registered trademark Ryton and having a tensile modulus of abouth 6900mPa and monofilaments formed of PEEK (poly ether ether ketone) having a tensile modulus of about 5200mPa may also be employed. The diameters of the first and second yarns vary depending upon the size of the article and the product for which it is intended that the sleeve be used, but that of the second yarn is from about 0.18mm to about 0.30mm in diameter.

It will be appreciated that although the first and second yarns may be quite different, it is also possible to use the same material for both. For example, an all-polyester sleeve product may be produced from a bulky multifilament polyester yarn and polyester monofilament yarn.

The sleeve type coverings described herein are preferably formed by weaving, knitting or braiding together the first and second yarns. The number of monofilaments constitutes from 50 to 75 per cent of the total number of yarns used in the making of the articles of this invention. The number chosen is based on the particular use, environmental conditions, costs, and the nature of the article or articles to be covered. Preferably the second yarn is uniformly distributed throughout the knitted, woven or braided article. The choice of the number of monofilaments is such as to impart a handling characteristic such that tubular articles tend to open up and flat articles tend to stay flat. The ratio of the numbers of yarns present is one end of bulky yarn to from one end to three ends of monofilament, more preferably 1:2 or 1:3. The bulky yarn of this invention should allow for intimate contact with the conductors or tubes being bundled and should preferably allow for axial compression so as to permit temporary access to the conductors being protected.

Preferably the flexible sleeve type coverings made according to the invention described herein are made by braiding or by circular knitting, and in the braiding or knitting the monofilament yarns are evenly spaced. In a braiding operation, the first yarn and the second yarn may each be fed from separate bobbins or carriers on the braider or may be combined in desired ratios on the carriers. A particularly preferred method of braiding is to have the number of carriers of the first yarn be 32 and that of the monofilament be 32 and the number of ends per carrier for the first yarn be 1 and the for second yarn be 2. The monofilament yarns should be evenly spaced about the deck of the braider with half going in one direction and half in the opposite direction.

The invention is illustrated by the following Examples.

### Example 1

A braided sleeve of outside diameter approximately 25mm was formed from one end of a first, bulky, continuous polypropylene yarn of about 540tex and having a density of about 70% less than the density of a non-bulky yarn of the same composition and diameter, to two ends of a polyester monofilament 0.25mm in diameter. The monofilament polyester employed had a tensile modulus of about 690mPa; it is available under the trade mark "Estralyn" from Johnson Filament of Williston, Vermont. The two ends of monofilament polyester and one end of polypropylene were loaded onto 64 carriers on a braider and braided into a 25mm diameter tubular sleeve. The sleeve so formed had 64 ends of monofilament and 32 ends of bulky yarn. Its handling characteristics were such that it tended to assume the open position readily without undue manual manipulation. The presence of the monofilament did not discernably impair the sound absorbency properties of the first yarn.

### Example 2

A knitted sleeve of approximately 25mm outside diameter was made on a circular knitting machine using a first, bulky, continuous filament polypropylene yarn and the same polyester monofilament as in example 1. The monofilament component was uniformly distributed throughout the sleeve, there being one end of bulky yarn to every two ends of monofilament yarn. The sleeve so produced was coated with "Milease" F15, a fluorochemical water repellent sold by ICI, to reduce moisture absorbency. Again, the presence of the monofilament did not discernably impair the sound absorbency properties of the first yarn.

## Claims

1. A textile sleeve for bundling of elongated substrates, said sleeve comprising a plurality of interthreaded first and second yarns, the first yarn being a bulky filament yarn and the second yarn being a monofilament of an engineering plastics material, characterised in that said monofilament has a diameter of about 0.18mm to about 0.3mm and a tensile modulus of at least 690mPa, and that the two yarns are present in the sleeve in the ratio of one end of bulky yarn to from one end to three ends of monofilament.

2. A sleeve according to claim 1, characterised in that said first yarn has a tex in the range from about 400 to 850.

3. A sleeve according to claim 1 or claim 2 characterised in that said first yarn has a tex of about 540.

4. A sleeve according to any of claims 1-3 characterised in that said sleeve is a braided sleeve.

5. A sleeve according to any of claims 1-3 characterised in that said sleeve is a knitted sleeve.

6. A sleeve according to any of claims 1-5 characterised in that said first and second yarns are both of polyester material.

7. A sleeve according to any of claims 1-5 characterised in that said first yarn is polypropylene and said second yarn is a polyester monofilament.

8. A sleeve according to any preceding claim characterised in that the ratio of the number of monofilament yarn ends to bulky yarn ends is 2:1.

9. A sleeve according to any preceding claim, characterised in that said monofilament has a diameter of about 0.25mm.

## Patentansprüche

1. Textilschlauch zum Bündeln von länglichen Substraten, welcher Schlauch eine Mehrzahl von miteinander verwobenen ersten und zweiten Garnen aufweist, wobei das erste Garn ein voluminöser Endlosfaden und das zweite Garn ein Einzelfaden aus einem technischen Kunststoffmaterial ist, dadurch gekennzeichnet, daß der Einzelfaden einen Durchmesser von etwa 0,18 bis etwa 0,3 mm und einen Zugmodul von wenigstens 690 mPa aufweist, und daß die zwei Garne in dem Schlauch in dem Verhältnis von einem Kettfaden des voluminösen Fadens zu drei Kettfäden des Einzelfadens vorhanden sind.

2. Schlauch nach Anspruch 1, dadurch gekennzeichnet, daß das erste Garn eine Feinheit im Tex-System im Bereich von 400 bis 850 aufweist.

3. Schlauch nach Anspruch 1 oder 2, dadurch gekennzeichnet, daß das erste Garn eine Feinheit im Tex-System von etwa 540 aufweist.

4. Schlauch nach einem der Ansprüche 1 bis 3, dadurch gekennzeichnet, daß der Schlauch ein geflochtener Schlauch ist.

5. Schlauch nach eine der Ansprüche 1 bis 3, dadurch gekennzeichnet, daß der Schlauch ein gewirkter Schlauch ist.

6. Schlauch nach eine der Ansprüche 1 bis 5, dadurch gekennzeichnet, daß die ersten und zweiten Garne beide aus Polyestermaterial bestehen.

7. Schlauch nach eine der Ansprüche 1 bis 5, dadurch gekennzeichnet, daS das erste Garn aus Polypropylen ist und das zweite Garn ein Polyester-Einzelfaden ist.

8. Schlauch nach einem der vorhergehenden Ansprüche, dadurch gekennzeichnet, daS das Verhältnis der Zahl der Kettfäden des Einzelfadens zu den Kettfäden des voluminösen Fadens 2:1 ist.

9. Schlauch nach einem der vorhergehenden Ansprüche, dadurch gekennzeichnet, daß der Einzelfaden einen Durchmesser von etwa 0,25 mm aufweist.

## Revendications

1. Gaine textile pour la mise en faisceau de supports allongés, ladite gaine comprenant une pluralité de premiers et seconds fils entrelacés, le premier fil étant un fil volumineux à filaments et le second fil étant un monofilament d'une matière plastique technique, caractérisée en ce que ledit monofilament a un diamètre de 0,18 mm à 0,3 mm environ et un module en traction d'au moins 690 mPa, et en ce que les deux fils sont présents dans la gaine dans le rapport d'une extrémité de fil volumineux à une à trois extrémités de monofilament.

2. Gaine selon la revendication 1, caractérisée en ce que ledit premier fil a un tex compris entre 400 et 850 environ.

3. Gaine selon la revendication 1 ou 2, caractérisée en ce que ledit premier fil a un tex de 540 environ.

4. Gaine selon l'une quelconque des revendications 1 à 3, caractérisée en ce que ladite gaine est une gaine tressée.

5. Gaine selon l'une quelconque des revendications 1 à 3, caractérisée en ce que ladite gaine est une gaine tricotée.

6. Gaine selon l'une quelconque des revendications 1 à 5, caractérisée en ce que lesdits premier et second fils sont tous deux en un matériau de polyester.

7. Gaine selon l'une quelconque des revendications 1 à 5, caractérisée en ce que ledit premier fil est du polypropylène et ledit second fil est un monofilament de polyester.

8. Gaine selon l'une quelconque des revendications précédentes, caractérisée en ce que le rapport du nombre d'extrémités de monofilament au nombre d'extrémités de fil volumineux est de 2:1.

9. Gaine selon l'une quelconque des revendications précédentes, caractérisée en ce que ledit monofilament a un diamètre de 0,25 mm environ.
